# EUROPEAN PATENT APPLICATION

(11) **EP 4 529 177 A1**
(43) Date of publication of application: **26.03.2025**
(21) Application number: 23849319.1
(22) Date of filing: 31.07.2023
(51) Int. Cl.: H04N 21/2187, H04N 21/44, H04N 21/234

(54) **VIDEO LIVE STREAMING METHOD AND APPARATUS, ELECTRONIC DEVICE AND STORAGE MEDIUM**

(30) Priority: 03.08.2022 CN 202210928158
(71) Applicant: DOUYIN VISION CO., LTD., Beijing 100041 (CN)
(72) Inventor: YUAN, Zhiqiang, Beijing 100086 (CN); LIN, Yi, Beijing 100086 (CN)
(74) Representative: Williams, Michael David
(86) International application number: PCT/CN2023/110083
(87) International publication number: WO 2024/027611

(57) **Abstract**

A method, an apparatus, an electronic device, and a storage medium for video live streaming. The video live streaming method comprises: determining first virtual picture data rendered by a first device end (S110); obtaining a corresponding first device end video stream by encoding the first virtual picture data (S120); pushing the first device end video stream to a second device end, to cause the first device end video stream, during the second device end performing video playback, being fused and displayed with second virtual picture data rendered by the second device end (S130).

## Description

This application claims priority to Chinese Patent Application No. 202210928158.X, filed on August 03, 2022, the entire content of which is incorporated herein by reference.

### FIELD

The present disclosure relates to the field of computer technologies, and in particular, to a method, an apparatus, an electronic device, and a storage medium for video live streaming.

### BACKGROUND

Virtual reality (VR) video live streaming has a good immersive experience, and also derives many different live streaming modes, for example, a virtual character is used to replace a performer for live streaming.

In order to increase interaction between a performer represented by the virtual character and the audience, the VR all-in-one machine is usually employed to fuse and render the virtual character picture and the audience picture. However, the performance of the VR all-in-one machine is limited, and the rendering distribution of the performer, the environment and the interactive audience is very limited. This leads to problems such as the character and the background rendered by the VR all-in-one machine being biased-pixelized, the edge sawtooth block and the like, and thus a good picture cannot be achieved.

### SUMMARY

The present application provides a method, an apparatus, an electronic device, and a storage medium for video live streaming, so that an interaction field for a local playing of a performer video stream and a local rendering of an audience video stream is achieved. The problem of insufficient local rendering performance is solved, and the animation precision of the performer is improved.

According to a first aspect, the present disclosure provides a video live streaming method, and the method includes: determining first virtual picture data rendered by a first device end; obtaining a corresponding first device end video stream by encoding the first virtual picture data; and pushing the first device end video stream to a second device end, to cause the first device end video stream, during the second device end performing video playback, being fused and displayed with second virtual picture data rendered by the second device end.

According to a second aspect, the present disclosure further provides a video live streaming method, and the method includes: receiving a first device end video stream, wherein the first device end video stream is obtained through encoding first virtual picture data by a first device end, and the first virtual picture data is obtained through rendering by the first device end; performing video playback on the first device end video stream; and during the second device end performing video playback on the first device end video stream, fusing and displaying second virtual picture data rendered by the second device end and a playback picture of the first device end video stream.

According to a third aspect, the present disclosure further provides a video live streaming apparatus, and the apparatus includes: a first virtual picture data determining module, configured for determining first virtual picture data rendered by a first device end; a first device end video stream determining module, configured for obtaining a corresponding first device end video stream by encoding the first virtual picture data; and a first device end video stream pushing module, configured for pushing the first device end video stream to a second device end, to cause the first device end video stream, during the second device end performing video playback, being fused and displayed with second virtual picture data rendered by the second device end.

According to a fourth aspect, the present disclosure further provides a video live streaming apparatus, and the apparatus includes: a first device end video stream receiving module, configured for receiving a first device end video stream, wherein the first device end video stream is obtained through encoding first virtual picture data by a first device end, and the first virtual picture data is obtained through rendering by the first device end; a first device end video stream playback module, configured for performing video playback on the first device end video stream; and a first device end video stream fusing module, configured for, during the second device end performing video playback on the first device end video stream, fusing and displaying second virtual picture data rendered by the second device end and a playback picture of the first device end video stream.

According to a fifth aspect, the present disclosure further provides an electronic device, and the electronic device includes: one or more processors; a storage device configured to store one or more programs. The one or more programs, when executed by the one or more processors, cause the one or more processors to implement the video live streaming method provided in the first aspect or the second aspect.

According to a sixth aspect, the present disclosure further provides a storage medium including computer executable instructions that, when executed by a computer processor, perform the video live streaming method provided in the first aspect or the second aspect.

According to a seventh aspect, the present disclosure further provides a computer program product, including a computer program carried on a non-transitory computer readable medium. The computer program includes program code for performing the video live streaming method provided in the first aspect or the second aspect.

### BRIEF DESCRIPTION OF DRAWINGS

FIG. 1 is a schematic flowchart of a video live streaming method according to an embodiment of the present disclosure;
FIG. 2 is a schematic diagram of video stream pushing according to an embodiment of the present disclosure;
FIG. 3 is a schematic diagram of a viewing effect of a viewer according to an embodiment of the present disclosure;
FIG. 4 is a schematic flowchart of another video live streaming method according to an embodiment of the present disclosure;
FIG. 5 is a schematic structural diagram of a video live streaming apparatus according to an embodiment of the present disclosure;
FIG. 6 is a schematic structural diagram of another video live streaming apparatus according to an embodiment of the present disclosure;
FIG. 7 is a schematic structural diagram of an electronic device according to an embodiment of the present disclosure.

### DETAILED DESCRIPTION

Embodiments of the present disclosure will be described below with reference to the accompanying drawings. Although some embodiments of the present disclosure are shown in the accompanying drawings, the present disclosure may be implemented in various forms, and these embodiments are provided for understanding the present disclosure. The drawings and embodiments of the present disclosure are for exemplary purposes only.

The steps recited in the method embodiments of the present disclosure may be performed in different orders, and/or in parallel. Further, the method embodiments may include additional steps and/or omit performing the illustrated steps. The scope of the present disclosure is not limited in this respect.

As used herein, the term "comprise" and variations thereof are open-ended, i.e., "include". The term "based on" is "based at least in part on". The term "an embodiment" means "at least one embodiment"; the term "another embodiment" means "at least one further embodiment"; the term "some embodiments" means "at least some embodiments". The relevant definition of other terms will be given below.

Concepts such as "first" and "second" mentioned in this disclosure are merely used to distinguish different apparatuses, modules, or units, and are not intended to limit the order of functions performed by the apparatuses, modules, or units or the mutual dependency relationship.

Modifications like "a" and "a plurality of' mentioned in this disclosure are illustrative and not limiting, and those skilled in the art will appreciate that they should be interpreted as "one or more" unless specifically stated otherwise.

The names of messages or information interacted between multiple devices in embodiments of the present disclosure are for illustrative purposes only and are not intended to limit the scope of such messages or information.

Before the technical scheme disclosed by the embodiment of the present disclosure is used, the type, the use range, the use scene and the like of the personal information involved in the disclosure should be informed to the user and obtain the authorization of the user in an appropriate manner according to relevant laws and regulations.

For example, in response to receiving an active request from a user, prompt information is sent to the user to explicitly prompt the user that the requested operation will need to acquire and use the personal information of the user. Therefore, the user can autonomously select whether to provide personal information to software or hardware (such as an electronic device, an application program, a server, a storage medium or the like) executing the operation of the technical solution of the present disclosure according to the prompt information.

As an implementation, in response to receiving the active request of the user, the manner of sending the prompt information to the user may be, for example, a pop-up window, and the prompt information may be presented in a text manner in the pop-up window. In addition, the pop-up window may further carry a selection control for the user to select "agree" or "not agree" to provide personal information to the electronic device.

The foregoing processes for notification and obtaining user authorization are merely illustrative, implementations of the present disclosure are not limited, and other manners of meeting related laws and regulations may also be applied to implementations of the present disclosure.

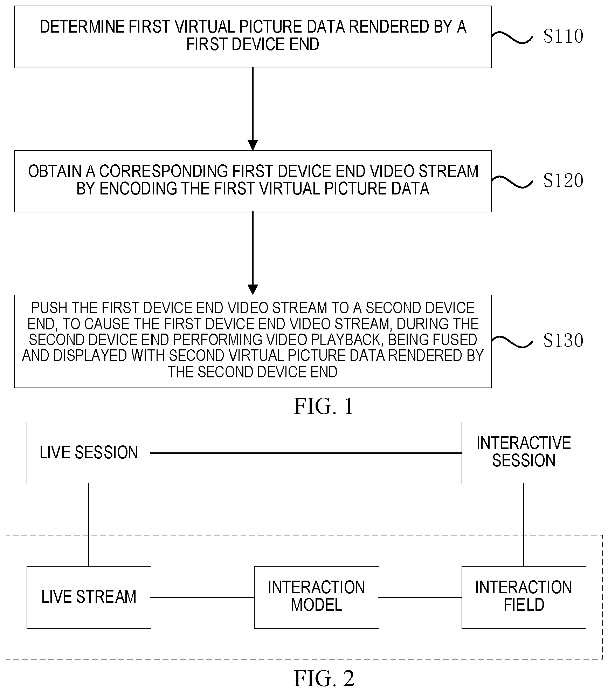

FIG. 1 is a schematic flowchart of a video live streaming method according to an embodiment of the present disclosure. The embodiment of the present disclosure is applicable to a scenario of rendering a live video of a performer. The method can be executed by a video live streaming apparatus, which can be implemented in the form of software and/or hardware. For example, the electronic device may be a mobile terminal, a personal computer (PC) end or a server.

As shown in FIG. 1, the method according to the embodiment of the present disclosure may include the following steps S110-S130:
S110: Determine first virtual picture data rendered by a first device end.

With the development of network technologies and virtual reality technologies, video live streaming is watched through a VR all-in-one machine, so that a viewer has a stronger interactive experience and a better immersive experience. The VR all-in-one machine has an independent processor having independent functions of operation, input and output. However, the performance of the independent processor in the VR all-in-one machine is limited, so that the rendering distribution of the performer, the environment and the interactive audience is very limited. This leads to problems such as the character and the background rendered by the VR all-in-one machine being biased-pixelized, the edge being sawtooth block and the like, and thus a good picture cannot be achieved.

In view of the above problems, the embodiments of the present disclosure may perform high-performance rendering on the collected live performance data of the performer through the first device end, so as to solve the problem of insufficient rendering performance of the VR all-in-one machine, and improve the animation precision of the performer. The first device end may be a workstation device configured to render live streaming performance data of the performer. For example, the first device end may be a graphics workstation or a device with a high-performance rendering function. A high-performance graphics card may be used in the first device end to improve rendering performance of the collected picture data.

The first virtual picture data may be virtual screen data towards the performer for the viewer to view a performance. The first virtual picture data may be obtained by rendering the collected live performance data of the performer through the first device end. The live performance data of the performer may be collected by the cameras at a plurality of positions to generate picture data in the three-dimensional scene with stereoscopic perception, to obtain the first virtual picture data. The first device may render the collected picture data based on a predetermined environment, light, material, texture and rendering parameters, to obtain the first virtual picture data.

As an implementation, determining the first virtual picture data rendered by the first device end may include a procedure of the following steps A1 to A2:
Step A1: perform action data capture and audio data collection on a first real object of the first device end.

The first real object may be a performer. The first virtual picture data may usually consist of data such as an action picture and/or sound, where the action picture belongs to picture data, and the sound belongs to audio data. Therefore, during a determination of the first virtual picture data, the performance actions and the sound of the first real object need to be collect separately. For example, the action data capture and the audio data collection are performed on the first real object at the first device end.

The action data may include body action data and facial expression action data of the first real object. The body action data may be acquired through a body action capture device worn by performer. For example, the body action capture device may be a garment, a glove, or the like, and for another example, the body action capture device may be a sensor installed at a plurality of movable joints of the performer. The facial expression action data may be acquired by at least one picture collector facing the performer's face; or the facial expression action of the performer may be acquired through a head-mounted device, so that the acquired facial expression actions of the performer are consecutive.

The audio data may include sound data jointly generated by the first real object, the background music, and the noise during live streaming. For example, the sound collection device may be a microphone, a throat-mic, or the like. The collected sound data may also be denoised to obtain pure audio data.

Step A2: perform virtual picture rendering processing on the captured action data and the collected audio data, to obtain the first virtual picture data rendered by the first device side. A picture rendering performance of the first device end is higher than that of the second device end.

The virtual picture rendering processing may be rendering, based on a display adapter of the first device end, the captured action data and collected audio data to generate first virtual picture data, to obtain virtual picture data of one or more visual angles. The virtual object may be generated based on the captured action data, and the virtual object is driven by the control instruction generated by the captured action data. The virtual object may be a cartoon character, an animal character, a real character, or the like. A voice modulation processing may also be performed based on the audio data, and the voice modulation may be determined based on the type of the generated virtual object. By performing virtual picture rendering on the processed action data and the processed collected audio data, the first virtual picture data rendered by the first device end may be obtained.

As an implementation, the picture rendering performance of the first device end is higher than that of the second device end. Because the performance of the independent processor in the VR all-in-one machine is limited, the rendering distribution of the performer, the environment and the interactive audience is very limited, so the first device end (that is, a device end where the first real object performs video live streaming) with high picture rendering performance is used to render the video live streaming content of the first real object, so as to avoid the problem that the picture precision is low when the VR all-in-one machine plays the live streaming video.

As an implementation, performing the virtual picture rendering processing on the captured action data and the collected audio data may include a procedure of the following steps B1 to B3:
Step B1: generate a first virtual object of the first real object based on the captured action data.
   The first virtual object may be a virtual model same as or similar with the captured action data of the first real object. The type of the first virtual object may be a cartoon character, an animal character, a real character, or the like. The three-dimensional (3D) data type of the first virtual object may be gridded model data, voxel data, mapping texture data, or other combinations. The type of the first virtual object may be selected in a pre-stored virtual character asset library in the first device end.
Step B2: generate first virtual animation data comprising the first virtual object based on the first virtual object and a virtual picture background to be used for the first virtual object.

The virtual picture background may be determined based on a pre-stored stage background asset library in the first device end. For example, the virtual picture background may be a theater stage, a singing hall stage, an outdoor lawn, or the like. The virtual picture background may be predetermined in the first device end, or may be selected based on actual need.

The first virtual animation data may be a plurality of picture data frames formed based on the first virtual object and a virtual picture background to be used for the first virtual object. A fusion processing is performed on the first virtual object and the virtual picture background to be used for the first virtual object to generate the first virtual animation data including the first virtual object.

Step B3: perform virtual picture rendering processing on the first virtual animation data and the collected audio data.

A display adapter is a device for controlling picture information to be displayed by the first device. The generated first virtual animation data and the collected audio data are fused by using the display adapter of the first device end. For example, the generated first virtual animation data may be sequentially matched with an audio data frame(s) based on a sequence of the plurality of picture data frames in the first virtual animation data, so as to obtain the rendered first virtual picture data.

S120: obtain a corresponding first device end video stream by encoding the first virtual picture data.

On the one hand, the first virtual picture data is rendered based on a combination of a plurality of video frames and audio frames, and a memory space occupied by the first virtual picture data is very large. If it is transmitted directly through the network, it is likely to increase transmission costs. On the other hand, the rendering capability of the second device end is limited. If the second device end directly renders and displays the first virtual picture data with the three-dimensional stereoscopic effect, the insufficient rendering performance of the second device end may result in the problems (such as partial pixelation, edge sawtooth blockiness and the like) of the character and the background rendered by the second device end, and thus a good picture effect cannot be achieved. In summary, the first virtual picture data with the three-dimensional stereoscopic effect may be encoded and compressed by the encoder configured for the first device end, to obtain the corresponding first device end video stream, so as to avoid subsequent rendering.

For example, the first virtual picture data is inputted into an encoder, and the encoder encodes according to a predetermined encoding standard, and outputs a corresponding first device end video stream. The encoding standard may be H.261, H.263, Moving Picture Expert Group (MPEG), or the like. As an implementation, obtaining the corresponding first device end video stream by encoding the first virtual picture data may include a procedure of the following steps C1 to C2:
Step C1: collect first virtual picture data of at least one visual angle through a virtual reality engine of the first device end.

The virtual reality engine may be a general development platform based on an underlying program language, and includes a plurality of interaction hardware interfaces, a graphic data management and drawing module, a function design module, a message response mechanism, a network interface, and the like. For example, the virtual reality engine may be a game engine Unity, an Unreal Engine (UE), or the like.

For example, based on the virtual reality engine of the first device end, action data capture and audio data collection are performed on the first real object, and virtual picture rendering processing is performed on the captured action data and the collected audio data to obtain the first virtual picture data of the at least one visual angle.

Step C2: obtain a first device end video stream of the at least one visual angle by encoding the first virtual picture data of the at least one visual angle.

The first virtual picture data of different visual angles may be separately encoded to obtain the first device end video stream of different visual angles. In aid of the virtual reality engine of the first device end, the first virtual picture data of the at least one visual angle is collected and encoded to obtain the first device end video stream of the at least one visual angle. Thereby, the requirements of viewers at different visual angles can be satisfied.

S130: push the first device end video stream to a second device end, to cause the first device end video stream, during the second device end performing video playback, being fused and displayed with second virtual picture data rendered by the second device end.

The second device may be a device used by the viewer when watching the video live stream. For example, the second device may be a terminal display device having a virtual reality function. The second device may be a VR all-in-one machine, a binocular omnidirectional display, or the like.

In the embodiment of the present disclosure, pushing the first device end video stream to the second device end may comprise: uploading the first device end video stream to a cloud server at first, and then pushing the first device end video stream to the corresponding interaction model by the cloud server based on the video stream request information of the interaction model. The interaction model is an interaction field generated by modeling, and the interaction model has an original identifier (ID), which may be used to bind a mapping relationship between the first device end video stream and the interaction model.

For example, FIG. 2 is a schematic diagram of video stream pushing according to an embodiment of the present disclosure. As shown in FIG. 2, an essence of the video stream pushing is to push the video live streaming content in a live session into the interactive session, wherein the video live streaming content in the live session is the first device end video stream. The number of viewers in the live session has no upper limit, while the number of viewers in the interactive session has an accommodation upper limit. Therefore, the number of interactive sessions is determined based on the accommodation upper limit of each interactive session and the number of viewers in the live session, and a predetermined number of viewers are divided into multiple interactive sessions. The video live streaming content viewed in each interactive session is the same.

The first device end collects the first device end video stream of the at least one visual angle. The second device end pulls the first device end video stream into the interaction model through the mapping relationship between the first device end video stream and the interaction model. Based on the number of the interactive sessions, the interaction model is copied to obtain interaction fields with the same number as the number of the interactive sessions, so as to accommodate all audiences in the live session.

When the first device end video stream is played at the second device end, the first device end video stream and the second virtual picture data rendered by the second device end are fused and displayed. That is, the performer-oriented live video stream and the virtual picture data of other viewers in the same interactive session may be fused and displayed to obtain a three-dimensional panoramic animation display effect, so as to enhance the interactive experience of the audience.

The second virtual picture data can be non-audience-oriented virtual picture data. For example, the second virtual picture data may be virtual picture data of other viewers in the same interactive session. The second virtual picture data may be virtual characters and custom nicknames of other viewers in the same interactive session. For the viewing experience of the audience, the virtual characters of other audiences in the same interactive session may be simplified, so that the rendering performance assignment of the second device end to other interactive audiences is reduced, and the animation precision of the performer is improved.

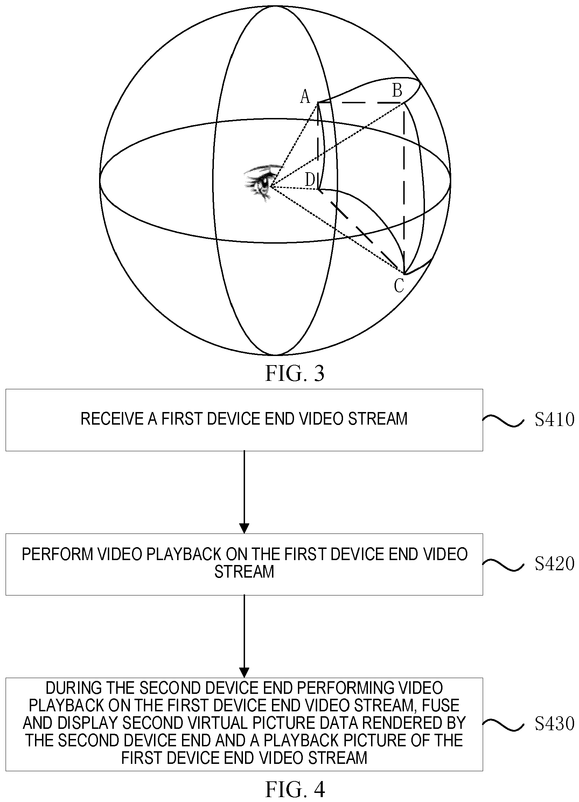

FIG. 3 is a schematic diagram of a viewing effect of a viewer according to an embodiment of the present disclosure. As shown in FIG. 3, the planar quadrilateral ABCD is the viewing effect played by the first device end video stream, which cannot achieve the effect of virtual reality. Therefore, in order to realize an interaction filed of a local playback of the video stream of the performer and a local rendering of the video stream of the audience, the first device end video stream is seamlessly fused with the second virtual picture data through the second device end when the second device end performs video playback. As shown in FIG. 3, the curved quadrilateral ABCD is a viewing effect in a case where the first device end video stream is fused and displayed with the second virtual picture data rendered by the second device end when the second device end performs video playback.

In an implementation, pushing the first device end video stream to the second device end may include a procedure of the following steps D1 to D2:
Step D1: convert the first device end video stream to a first device end video stream in a real-time messaging protocol format.

To facilitate a communication of audio, video and data between different devices, a protocol format of a first device end video stream may be converted into a first device end video stream in a real-time messaging protocol format.

Real-time messaging protocol (RTMP) format is a network protocol used for real-time data communication, and is mainly used for the communication of audio, video and data between a Flash/Adobe Integrated Runtime (AIR) platform and a streaming media/interaction server supporting RTMP.

Step D2: push the format-converted first device end video stream to a corresponding video stream server, to cause the second device end to pull the format-converted first device end video stream from the video stream server for playback.

The term "push" refers to a process of transmitting the format-converted first device end video stream to the corresponding video stream server, or may be transmitting the first virtual picture data collected by the first device end into the network. The viewer may control the second device end to pull the first device end video stream from the corresponding video stream server based on a mapping relationship between the interactive session in which the second device end is located and the first device end video stream, so as to play at the second device end.

For example, an RTMP (streaming protocol) is used as an example for explanation. In the first step, the first device end and the corresponding video stream server perform handshake. In the second step, the first device end establishes a network connection with the corresponding video stream server. In the third step, the first device end establishes a network flow with the corresponding video stream server. In the fourth step, the second device end pulls the first device end video stream from the network stream and plays the video stream.

The first device end video stream is transmitted based on the real-time message transmission protocol. Thereby, the stability of the second device end for playing the first device end video stream can be improved, and thus the experience and satisfaction of the audience are improved.

In the above embodiments, the first device end corresponds to a workstation with a virtual reality function, and the first virtual picture data comprises virtual picture data of a performer. The second device end corresponds to a terminal display device with a virtual reality function, and the second virtual picture data comprises interactive virtual picture data of a viewer.

The first device end corresponds to a workstation having a virtual reality function, and the first device end may be a device that utilizes a computer to generate visual, auditory, and tactile sensations that may be directly applied to a viewer and allows the viewer to interactively observe and operate the virtual world. The first device end may include a modeling device (for example, a 3D scanner, a depth camera, etc.), a computing device (for example, a high-spec computer), and the like. The first virtual picture data includes virtual picture data of the performer, or may include picture data of actual performance scene other than the performer.

The second device end corresponds to a terminal display device having a virtual reality function, and the second device end may be a head-mounted display, a head-up display, an immersive projection system, or the like. The second virtual picture data includes interactive virtual picture data of the viewer. The interactive virtual picture data of the viewer may include action virtual picture data of the viewer herself/himself, and virtual picture data such as chat and interactive actions performed with other viewers in the same interactive session.

In the above embodiments, while the second device end performs video playback, the first device end video stream is seamlessly fused with the second virtual picture data through an interface design function and a color design function of the second device end.

The interface design function may include a service function and an application function of the second device end display interface, and provides a convenient function requirement design for the viewer. The viewer may use the interface design function through an interaction device (for example, a handle, a wearable device, a free mobile device, a simulation device, a mechanical feedback device, and the like).

The color design function may fuse the picture data at the boundary between the first device end video stream and the second virtual picture data rendered by the second device end. For example, the pixel values at the edges of the virtual object and the virtual background in the first device end video stream are fused. This can solve the problems (such as, bias-pixelated characters and backgrounds, jagged edge blockiness, or the like) rendered by the second device, and achieve better visual effects.

The embodiment of the present disclosure provides a video live streaming method, and the method comprises the following steps: determining first virtual picture data rendered by a first device end; obtaining a corresponding first device end video stream by encoding the first virtual picture data; and pushing the first device end video stream to a second device end, to cause the first device end video stream, during the second device end performing video playback, being fused and displayed with second virtual picture data rendered by the second device end. The proposed solution can achieve an interaction field of local playing of the performer video stream and local rendering the audience video stream. Thereby, the problem of insufficient local rendering performance is solved, and the animation precision of the performer is improved.

FIG. 4 is a schematic flowchart of another video live streaming method according to an embodiment of the present disclosure. The embodiments of the present disclosure are applicable to a case in which a viewer watches a live video and interacts in an interactive session. The method may be performed by a video live streaming device, and the apparatus may be implemented in a form of software and/or hardware. For example, the apparatus may be implemented with an electronic device. The electronic device may be a mobile terminal, a PC terminal or a server.

S410: receive a first device end video stream, wherein the first device end video stream is obtained through encoding first virtual picture data by a first device end, and the first virtual picture data is obtained through rendering by the first device end.

S420: perform video playback on the first device end video stream.

S430: during the second device end performing video playback on the first device end video stream, fusing and displaying second virtual picture data rendered by the second device end and a playback picture of the first device end video stream.

The embodiment of the present disclosure provides a video live streaming method, and the method comprises the following steps: receiving a first device end video stream, wherein the first device end video stream is obtained through encoding first virtual picture data by a first device end, and the first virtual picture data is obtained through rendering by the first device end; performing video playback on the first device end video stream; and during the second device end performing video playback on the first device end video stream, fusing and displaying second virtual picture data rendered by the second device end and a playback picture of the first device end video stream. The proposed solution can realize an interaction field of local playing of the performer video stream and local rendering the audience video stream. Thereby, the problem of insufficient local rendering performance is solved, and the animation precision of the performer is improved.

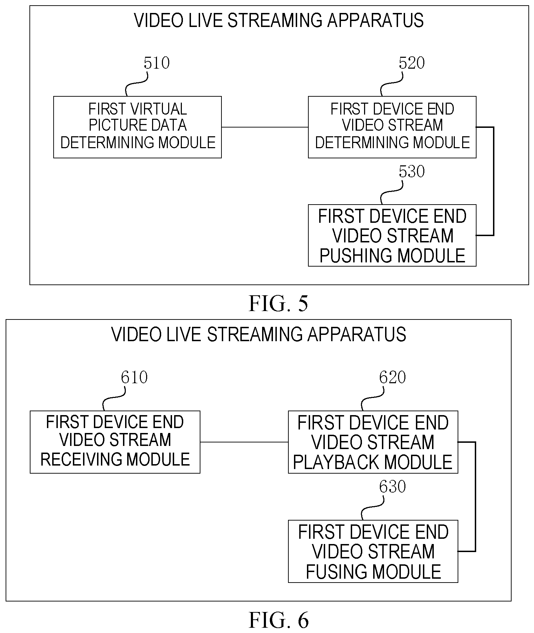

FIG. 5 is a schematic structural diagram of a video live streaming apparatus according to an embodiment of the present disclosure. As shown in Fig. 5, the apparatus comprises a first virtual picture data determining module, a first device end video stream determining module, and a first device end video stream pushing module. The first virtual picture data determining module 510 is configured for determining first virtual picture data rendered by a first device end. The first device end video stream determining module 520 is configured for obtaining a corresponding first device end video stream by encoding the first virtual picture data. The first device end video stream pushing module 530 is configured for pushing the first device end video stream to a second device end, to cause the first device end video stream, during the second device end performing video playback, being fused and displayed with second virtual picture data rendered by the second device end.

The embodiment of the present disclosure provides a video live streaming apparatus, and the apparatus performs the following steps: determining first virtual picture data rendered by a first device end; obtaining a corresponding first device end video stream by encoding the first virtual picture data; and pushing the first device end video stream to a second device end, to cause the first device end video stream, during the second device end performing video playback, being fused and displayed with second virtual picture data rendered by the second device end. The proposed solution can achieve an interaction field of local playing of the performer video stream and local rendering the audience video stream. Thereby, the problem of insufficient local rendering performance is solved, and the animation precision of the performer is improved.

In an embodiment, the first virtual picture data determining module 510 includes: a data collection unit configured for performing action data capture and audio data collection on a first real object of the first device end; and a first virtual picture data determining unit configured for performing virtual picture rendering processing on the captured action data and the collected audio data, to obtain the first virtual picture data rendered by the first device side; wherein a picture rendering performance of the first device end is higher than that of the second device end.

In an embodiment, the first virtual picture data determining unit includes: a first virtual object generation subunit configured for generating a first virtual object of the first real object based on the captured action data; a first virtual animation data generation subunit configured for generating first virtual animation data comprising the first virtual object based on the first virtual object and a virtual picture background to be used for the first virtual object; and a virtual picture rendering subunit configured for performing virtual picture rendering processing on the first virtual animation data and the collected audio data.

In an embodiment, the first virtual picture data determining module 510 includes a first virtual picture data determining unit configured for collecting first virtual picture data of at least one visual angle through a virtual reality engine of the first device end. The first device end video stream determining module 520 includes a first device end video stream determining unit configured for obtaining a first device end video stream of the at least one visual angle by encoding the first virtual picture data of the at least one visual angle.

In an embodiment, the first device end video stream pushing module 530 includes: a first device end video stream format conversion unit configured for converting the first device end video stream to a first device end video stream in a real-time messaging protocol format; and a first device end video stream pushing unit configured for pushing the format-converted first device end video stream to a corresponding video stream server, to cause the second device end to pull the format-converted first device end video stream from the video stream server for playback.

In an embodiment, the first device end corresponds to a workstation with a virtual reality function, the first virtual picture data comprises virtual picture data of a performer; the second device end corresponds to a terminal display device with a virtual reality function, and the second virtual picture data comprises interactive virtual picture data of a viewer.

In an embodiment, during the second device end performing video playback, the first device end video stream is seamlessly fused with the second virtual picture data through an interface design function and a color design function of the second device end.

The video live streaming apparatus provided in the embodiments of the present disclosure may perform the video live streaming method provided by any embodiment of the present disclosure, and has corresponding function modules and effects of executing the method.

A plurality of units and modules included in the foregoing apparatus are only divided according to function logic, but are not limited to the foregoing division, as long as a corresponding function may be implemented. In addition, names of the plurality of function units are merely used to facilitate mutual differentiation, and are not intended to limit the protection scope of the embodiments of the present disclosure.

FIG. 6 is a schematic structural diagram of another video live streaming apparatus according to an embodiment of the present disclosure. As shown in Fig. 2, the apparatus comprises a first device end video stream receiving module, a first device end video stream playback module, and a first device end video stream fusing module. The first device end video stream receiving module 610 is configured for receiving a first device end video stream, wherein the first device end video stream is obtained through encoding first virtual picture data by a first device end, and the first virtual picture data is obtained through rendering by the first device end. The first device end video stream playback module 620 is configured for performing video playback on the first device end video stream. The first device end video stream fusing module 630 is configured for during the second device end performing video playback on the first device end video stream, fusing and displaying second virtual picture data rendered by the second device end and a playback picture of the first device end video stream.

The embodiment of the present disclosure provides a video live streaming apparatus, and the apparatus performs the following steps: receiving a first device end video stream, wherein the first device end video stream is obtained through encoding first virtual picture data by a first device end, and the first virtual picture data is obtained through rendering by the first device end; performing video playback on the first device end video stream; and during the second device end performing video playback on the first device end video stream, fusing and displaying second virtual picture data rendered by the second device end and a playback picture of the first device end video stream. The proposed solution can realize an interaction field of local playing of the performer video stream and local rendering the audience video stream. Thereby, the problem of insufficient local rendering performance is solved, and the animation precision of the performer is improved.

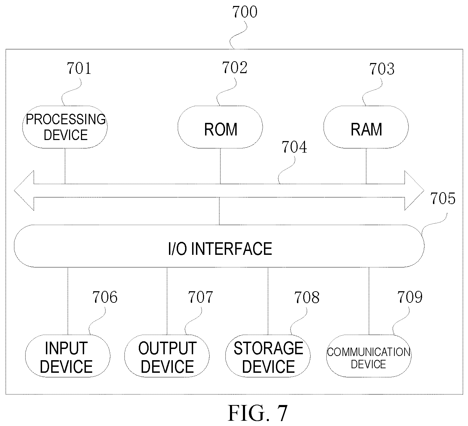

FIG. 7 is a schematic structural diagram of an electronic device according to an embodiment of the present disclosure. FIG. 7 is a schematic structural diagram of an electronic device (such as the terminal device or server in FIG. 7) 700 suitable for implementing the embodiments of the present disclosure. The terminal device in the embodiments of the present disclosure may include a mobile terminal such as a mobile phone, a notebook computer, a digital broadcast receiver, a personal digital assistant (PDA), a portable android device (PAD), a portable media player (PMP), an in-vehicle terminal (for example, an in-vehicle navigation terminal), and a fixed terminal such as a digital television (TV), a desktop computer, or the like. The electronic device 700 shown in FIG. 7 is merely an example, and should not impose any limitation on the functions and scope of use of the embodiments of the present disclosure.

As shown in FIG. 7, the electronic device 700 may include a processing device (for example, a central processing unit, a graphics processor, etc.) 701, which may perform various appropriate actions and processing according to a program stored in a read-only memory (ROM) 702 or a program loaded into a random access memory (RAM) 703 from a storage device 708. In the RAM 703, various programs and data required by the operation of the electronic device 700 are also stored. The processing device 701, the ROM 702, and the RAM 703 are connected to each other through a bus 704. An input/output (I/O) interface 705 is also connected to the bus 704.

Generally, the following devices may be connected to the I/O interface 705: an input device 706 including, for example, a touch screen, a touch pad, a keyboard, a mouse, a camera, a microphone, an accelerometer, a gyroscope, etc. ; an output device 707 including, for example, a liquid crystal display (LCD), a speaker, a vibrator, etc. ; a storage device 708 including, for example, a magnetic tape, a hard disk, etc.; and a communication device 709. The communication device 709 may allow the electronic device 700 to communicate wirelessly or wired with other devices to exchange data. Although FIG. 7 shows an electronic device 700 having multiple devices, it is not required to implement or have all the devices shown. More or fewer devices may alternatively be implemented or provided.

According to an embodiment of the present disclosure, the process described above with reference to the flowchart may be implemented as a computer software program. For example, embodiments of the present disclosure include a computer program product comprising a computer program embodied on a non-transitory computer readable medium, the computer program comprising program code for performing the method shown in the flowchart. In such embodiments, the computer program may be downloaded and installed from the network through the communication device 709, or installed from the storage device 708, or from the ROM 702. When the computer program is executed by the processing apparatus 701, the foregoing functions defined in the method of the embodiments of the present disclosure are performed.

The names of messages or information interaction between multiple devices in embodiments of the present disclosure are for illustrative purposes only and are not intended to limit the scope of such messages or information.

The electronic device provided by the embodiments of the present disclosure and the video live streaming method provided in the foregoing embodiments belong to the same concept, technical details not described in detail in this embodiment may refer to the foregoing embodiments, and this embodiment has the same effect as the foregoing embodiments.

An embodiment of the present disclosure provides a computer storage medium having a computer program stored thereon, the program, when executed by a processor, implements the video live streaming method provided in the foregoing embodiments.

The computer readable medium described above may be a computer readable signal medium or a computer readable storage medium or any combination of the two. The computer-readable storage medium may be, for example, an electrical, magnetic, optical, electromagnetic, infrared, or semiconductor system, device, or device, or any combination thereof. Examples of the computer-readable storage medium may include: an electrical connection having one or more wires, a portable computer diskette, a hard disk, a RAM, a ROM, an erasable programmable read-only memory (EPROM or Flash memory), an optical fiber, a portable compact disc read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms, including electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted by any suitable medium, including wires, optical cables, Radio Frequency (RF), and the like, or any suitable combination thereof.

In some implementations, the client, server may communicate using any currently known or future developed network protocol, such as Hypertext Transfer Protocol (HTTP), and may be interconnected with any form or medium of digital data communication (e.g., a communication network). Examples of communication networks include Local Area Networks (LANs), Wide Area Networks (WANs), Internet networks (e.g., the Internet), and peer-to-peer networks (e.g., ad hoc peer-to-peer networks), as well as any currently known or future developed networks.

The computer-readable medium described above may be included in the electronic device; or may be separately present without being assembled into the electronic device.

The computer readable medium carries one or more programs, and when the one or more programs are executed by the electronic device, the electronic device is caused to: the computer readable medium carries one or more programs, and when the one or more programs are executed by the electronic device, the electronic device is caused to: determine first virtual picture data rendered by a first device end; obtain a corresponding first device end video stream by encoding the first virtual picture data; and push the first device end video stream to a second device end, to cause the first device end video stream, during the second device end performing video playback, being fused and displayed with second virtual picture data rendered by the second device end.

Alternatively, the computer readable medium carries one or more programs, and when the one or more programs are executed by the electronic device, the electronic device is caused to: receive a first device end video stream, wherein the first device end video stream is obtained through encoding first virtual picture data by a first device end, and the first virtual picture data is obtained through rendering by the first device end; perform video playback on the first device end video stream; and during the second device end performing video playback on the first device end video stream, fuse and display second virtual picture data rendered by the second device end and a playback picture of the first device end video stream.

Computer program code for performing the operations of the present disclosure may be written in one or more programming languages, including object oriented programming languages, such as Java, Smalltalk, C + +, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a LAN or WAN, or may be connected to an external computer (e.g., connected through the Internet using an Internet service provider).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. For example, the first obtaining unit may be further described as "obtaining at least two units of Internet Protocol addresses".

The functions described above may be performed, at least in part, by one or more hardware logic components. For example, without limitation, the exemplary types of hardware logic components that may be used include: a field programmable gate array (FPGA), an application specific integrated circuit (ASIC), an application specific standard (ASSP), a system on chip (SOC), a complex programming logic device (CPLD), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include electronic, magnetic, optical, electromagnetic, infrared, or semiconductor systems, devices, or devices, or any suitable combination of the foregoing. Examples of machine-readable storage media may include electrical connections based on one or more lines, portable computer diskettes, hard disks, RAMs, ROMs, EPROMs or flash memories, optical fibers, CD-ROMs, optical storage devices, magnetic storage devices, or any suitable combination of the foregoing.

According to one or more embodiments of the present disclosure, example 1 provides a video live streaming method, comprising: determining first virtual picture data rendered by a first device end; obtaining a corresponding first device end video stream by encoding the first virtual picture data; and pushing the first device end video stream to a second device end, to cause the first device end video stream, during the second device end performing video playback, being fused and displayed with second virtual picture data rendered by the second device end
Example 2: The method of example 1, wherein determining the first virtual picture data rendered by the first device end comprises: performing action data capture and audio data collection on a first real object of the first device end; and performing virtual picture rendering processing on the captured action data and the collected audio data, to obtain the first virtual picture data rendered by the first device side; wherein a picture rendering performance of the first device end is higher than that of the second device end.

Example 3: The method of example 2, wherein performing the virtual picture rendering processing on the captured action data and the collected audio data comprises: generating a first virtual object of the first real object based on the captured action data; generating first virtual animation data comprising the first virtual object based on the first virtual object and a virtual picture background to be used for the first virtual object; and performing virtual picture rendering processing on the first virtual animation data and the collected audio data.

Example 4: The method of claim 1, wherein determining the first virtual picture data rendered by the first device end comprises: collecting first virtual picture data of at least one visual angle through a virtual reality engine of the first device end; and obtaining the corresponding first device end video stream by encoding the first virtual picture data comprises: obtaining a first device end video stream of the at least one visual angle by encoding the first virtual picture data of the at least one visual angle.

Example 5: The method of example 1, wherein pushing the first device end video stream to the second device end comprises: converting the first device end video stream to a first device end video stream in a real-time messaging protocol format; and pushing the format-converted first device end video stream to a corresponding video stream server, to cause the second device end to pull the format-converted first device end video stream from the video stream server for playback.

Example 6: The method of any of examples 1-5, wherein the first device end corresponds to a workstation with a virtual reality function, the first virtual picture data comprises virtual picture data of a performer; the second device end corresponds to a terminal display device with a virtual reality function, and the second virtual picture data comprises interactive virtual picture data of a viewer.

Example 7: The method of any of examples 1-5, wherein during the second device end performing video playback, the first device end video stream is seamlessly fused with the second virtual picture data through an interface design function and a color design function of the second device end.

According to one or more embodiments of the present disclosure, example 8 provides a video live streaming method, comprising: receiving a first device end video stream, wherein the first device end video stream is obtained through encoding first virtual picture data by a first device end, and the first virtual picture data is obtained through rendering by the first device end; performing video playback on the first device end video stream; and during the second device end performing video playback on the first device end video stream, fusing and displaying second virtual picture data rendered by the second device end and a playback picture of the first device end video stream.

According to one or more embodiments of the present disclosure, example 9 provides a video live streaming apparatus, comprising: a first virtual picture data determining module, configured for determining first virtual picture data rendered by a first device end; a first device end video stream determining module, configured for obtaining a corresponding first device end video stream by encoding the first virtual picture data; and a first device end video stream pushing module, configured for pushing the first device end video stream to a second device end, to cause the first device end video stream, during the second device end performing video playback, being fused and displayed with second virtual picture data rendered by the second device end.

According to one or more embodiments of the present disclosure, example 10 provides a video live streaming apparatus, comprising: a first device end video stream receiving module, configured for receiving a first device end video stream, wherein the first device end video stream is obtained through encoding first virtual picture data by a first device end, and the first virtual picture data is obtained through rendering by the first device end; a first device end video stream playback module, configured for performing video playback on the first device end video stream; and a first device end video stream fusing module, configured for, during the second device end performing video playback on the first device end video stream, fusing and displaying second virtual picture data rendered by the second device end and a playback picture of the first device end video stream.

According to one or more embodiments of the present disclosure, example 11 provides an electronic device, including: one or more processors; and a storage device configured to store one or more programs; wherein the one or more programs, when executed by the one or more processors, cause the one or more processors to implement the video live streaming method according to any one of examples 1-8.

According to one or more embodiments of the present disclosure, example 12 provides a storage medium comprising computer-executable instructions, wherein the computer-executable instructions, when executed by a computer processor, perform the video live streaming method of any of examples 1-8.

According to one or more embodiments of the present disclosure, example 13 provides a computer program product, comprising a computer program carried on a non-transitory computer readable medium, the computer program comprising program code for performing the video live streaming method of any of examples 1-8.

Further, while multiple operations are depicted in a particular order, this should not be interpreted to require that these operations be performed in the particular order shown or in sequential order. In certain circumstances, multitasking and parallel processing may be advantageous. Likewise, while multiple implementation details are included in the discussion above, these should not be construed as limiting the scope of the present disclosure. Some features described in the context of separate embodiments may also be implemented in combination in a single embodiment. On the contrary, the various features described in the context of a single embodiment may also be implemented in multiple embodiments either individually or in any suitable sub-combination.

## Claims

1. A video live streaming method, comprising:
determining first virtual picture data rendered by a first device end;
obtaining a corresponding first device end video stream by encoding the first virtual picture data;
pushing the first device end video stream to a second device end, to cause the first device end video stream, during the second device end performing video playback, being fused and displayed with second virtual picture data rendered by the second device end.

2. The method of claim 1, wherein determining the first virtual picture data rendered by the first device end comprises:
performing action data capture and audio data collection on a first real object of the first device end;
performing virtual picture rendering processing on the captured action data and the collected audio data, to obtain the first virtual picture data rendered by the first device side;
wherein a picture rendering performance of the first device end is higher than that of the second device end.

3. The method of claim 2, wherein performing the virtual picture rendering processing on the captured action data and the collected audio data comprises:
generating a first virtual object of the first real object based on the captured action data;
generating first virtual animation data comprising the first virtual object based on the first virtual object and a virtual picture background to be used for the first virtual object;
performing virtual picture rendering processing on the first virtual animation data and the collected audio data.

4. The method of claim 1, wherein determining the first virtual picture data rendered by the first device end comprises:
collecting first virtual picture data of at least one visual angle through a virtual reality engine of the first device end;
obtaining the corresponding first device end video stream by encoding the first virtual picture data comprises:
obtaining a first device end video stream of the at least one visual angle by encoding the first virtual picture data of the at least one visual angle.

5. The method of claim 1, wherein pushing the first device end video stream to the second device end comprises:
converting the first device end video stream to a first device end video stream in a real-time messaging protocol format;
pushing the format-converted first device end video stream to a corresponding video stream server, to cause the second device end to pull the format-converted first device end video stream from the video stream server for playback.

6. The method of any of claims 1-5, wherein the first device end corresponds to a workstation with a virtual reality function, the first virtual picture data comprises virtual picture data of a performer; the second device end corresponds to a terminal display device with a virtual reality function, and the second virtual picture data comprises interactive virtual picture data of a viewer.

7. The method of any of claims 1-5, wherein during the second device end performing video playback, the first device end video stream is seamlessly fused with the second virtual picture data through an interface design function and a color design function of the second device end.

8. A video live streaming method, comprising:
receiving a first device end video stream, wherein the first device end video stream is obtained through encoding first virtual picture data by a first device end, and the first virtual picture data is obtained through rendering by the first device end;
performing video playback on the first device end video stream;
during the second device end performing video playback on the first device end video stream, fusing and displaying second virtual picture data rendered by the second device end and a playback picture of the first device end video stream.

9. A video live streaming apparatus, comprising:
a first virtual picture data determining module, configured for determining first virtual picture data rendered by a first device end;
a first device end video stream determining module, configured for obtaining a corresponding first device end video stream by encoding the first virtual picture data;
a first device end video stream pushing module, configured for pushing the first device end video stream to a second device end, to cause the first device end video stream, during the second device end performing video playback, being fused and displayed with second virtual picture data rendered by the second device end.

10. A video live streaming apparatus, comprising:
a first device end video stream receiving module, configured for receiving a first device end video stream, wherein the first device end video stream is obtained through encoding first virtual picture data by a first device end, and the first virtual picture data is obtained through rendering by the first device end;
a first device end video stream playback module, configured for performing video playback on the first device end video stream;
a first device end video stream fusing module, configured for, during the second device end performing video playback on the first device end video stream, fusing and displaying second virtual picture data rendered by the second device end and a playback picture of the first device end video stream.

11. An electronic device, comprising:
at least one processor; and
a storage device configured to store at least one program;
the at least one program, when executed by the at least one processor, causing the at least one processor to implement the video live streaming method of any of claims 1-8.

12. A storage medium comprising computer-executable instructions, wherein the computer-executable instructions, when executed by a computer processor, perform the video live streaming method of any of claims 1-8.

13. A computer program product, comprising a computer program carried on a non-transitory computer readable medium, the computer program comprising program code for performing the video live streaming method of any of claims 1-8.
